# EUROPEAN PATENT APPLICATION

(11) **EP 4 624 420 A1**
(43) Date of publication of application: **01.10.2025**
(21) Application number: 22966423.0
(22) Date of filing: 21.11.2022
(51) Int. Cl.: C01B 33/12, B01J 20/12, C01B 33/40, C02F 1/28

(54) **POROUS SILICA-CLAY COMPOSITE MATERIAL, WATER PURIFYING AGENT INCLUDING POROUS SILICA-CLAY COMPOSITE MATERIAL, POROUS SILICA-CLAY COMPOSITE MATERIAL-INCLUDING POWDER FOR SOIL, AND POROUS SILICA-CLAY COMPOSITE MATERIAL PRODUCTION METHOD**

(71) Applicant: Nikon Corporation, Tokyo 140-8601 (JP)
(72) Inventor: SUZUKI, Ryoko, Tokyo 140-8601 (JP)
(74) Representative: Hoffmann Eitle
(86) International application number: PCT/JP2022/042938
(87) International publication number: WO 2024/111012

(57) **Abstract**

Provided is a porous silica-clay composite material, wherein, by wt%, a content rate of a clay material with respect to a sum of the clay material and silica [[clay material/(clay material + silica)] × 100] is 1 to 10%, and a specific surface area is 1,080 m²/g or greater.

## Description

### Technical Field

The present invention relates to a porous silica-clay composite material, a water purifying agent containing porous silica-clay composite material, soil treatment powder containing porous silica-clay composite material, and a method of producing porous silica-clay composite material.

### Background Art

Porous silica is known for its use in adsorbing gases, water, and the like. In order to improve adsorption performance of porous silica, it is necessary to increase the specific surface area, but there is a limit.

### Citation List

### Patent Literature

PTL 1: JP 2008-137859 A

### Summary of Invention

An aspect according to the present invention is a porous silica-clay composite material, wherein, by wt%, a content rate of a clay material with respect to a sum of the clay material and silica [[clay material/(clay material + silica)] × 100] is 1 to 10%, and a specific surface area is 1,080 m²/g or greater.

Another aspect of the present invention is a water purifying agent containing the above-mentioned porous silica-clay composite material.

Another aspect of the present invention is soil treatment powder containing the above-mentioned porous silica-clay composite material.

Another aspect of the present invention is a method of producing a porous silica-clay composite material, the method including i) a mixing step for mixing a first solution and a second solution, the first solution containing a clay material, a base, and water, the second solution containing a silica source, an acid, water, and optionally the clay material, and ii) a drying step for heating and drying a mixed solution obtained through mixing in the mixing step, wherein a sum of a weight of the silica source and a weight of the acid with respect to a sum of a weight of the clay material and a weight of the base in the mixed solution [(weight of silica source + weight of acid)/(weight of clay material + weight of base)] is 52 to 300.

### Brief Description of Drawings

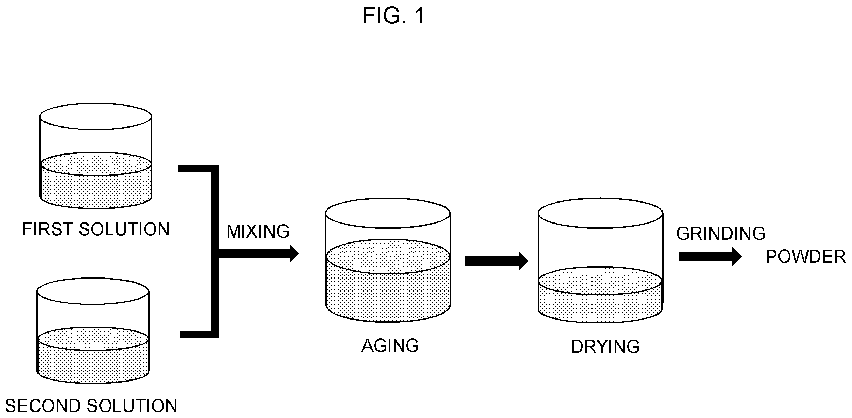

FIG. 1 is a schematic diagram illustrating an example of a method of producing a porous silica-clay composite material according to the present invention.

### Description of Embodiments

Hereinafter, description is made on an embodiment of the present invention (hereinafter, referred to as the "present embodiment"). The present embodiment described below is an example for describing the present invention, and is not intended to limit the present invention to the contents described below. The present invention may be modified as appropriate and carried out without departing from the gist thereof.

### <Porous Silica-Clay Composite Material>

A porous silica-clay composite material according to the present embodiment is a porous silica-clay composite material where, by wt%, a content rate of a clay material with respect to a sum of the clay material and silica [[clay material/(clay material + silica)] × 100] is 1 to 10%, and a specific surface area is 1,080 m²/g or greater.

First, components of the porous silica-clay composite material according to the present embodiment are described.

The clay material (clay) is a natural or artificial swelling clay mineral. Examples of the swelling clay mineral include bentonite, saponite, stevensite, hectorite, and the like. Those clay materials may be contained individually, or may be contained in combination. Further, the clay material in the present specification refers to a clay material in a dry state that does not contain moisture.

Examples of the silica include a silicon compound such as silicon dioxide, which is a hydrolysis product of alkoxysilane. Examples of alkoxysilane serving as the silica source include tetramethoxysilane, tetraethoxysilane, trimethylmethoxysilane, dimethyldimethoxysilane, diethylethoxysilane, hydroxyethyltrimethoxysilane, hydroxyethyl dimethylmethoxysilane, 3-aminopropyldimethylmethoxysilane, 3-aminopropyltriethoxysilane, 3-mercaptopropyltrimethoxysilane, 2-methoxyethyltriethoxysilane, phenyltriethoxysilane, p-hydroxyphenyltrimethoxysilane, p-hydroxybenzyltriethoxysilane, and p-mercaptobenzyltripropoxysilane, and tetramethoxysilane and tetraethoxysilane are preferred. Further, water glass may be used as the silica source.

In general, a clay mineral has a basic structure consisting of three nanosheets, with negatively charged octahedral nanosheets of AlO₆ or MgO₆ sandwiched between negatively charged tetrahedral nanosheets of SiO₄. This basic structure forms a single layer, and a plurality of layers of the basic structure are stacked together. Between the layers, exchangeable cations such as potassium ions are present, and the layers are electrostatically bound to each other by these cations. However, due to the weak binding between the layers, the layers easily swell or peel in water. However, when the silica and the clay material are mixed, the silica infiltrates between the layers of the clay mineral, and the three-dimensional structure of the clay mineral can be maintained through the silica.

The content rate of the clay material is 1 to 10% by wt%. When the content rate is excessively high, the clay material cannot be mixed uniformly in a sample. When the content rate is excessively low, the specific surface area cannot be increased easily. In view of this, a lower limit of the content rate is preferably 1.1%, more preferably, 1.2%, further preferably, 1.25%. An upper limit of the content rate is preferably 9%, more preferably, 8%, further preferably, 7%.

Additionally, depending on the application, a publicly-known component such as a colorant, a decolorant, a deodorant, a viscosity adjuster, a pH adjuster, or a fertilizer component can be added in an appropriate amount. Further, in addition to the components described above, other components may be added as long as the effects of the porous silica-clay composite material according to the present embodiment can be exerted.

Next, the physical property of the porous silica-clay composite material according to the present embodiment is described.

The specific surface area of the porous silica-clay composite material according to the present embodiment is 1,080 m²/g or greater. A lower limit of the specific surface area is preferably 1,100 m²/g, more preferably, 1,150 m²/g, further preferably, 1,200 m²/g. For example, an upper limit of the specific surface area may be 2,000 m²/g, or may be 1,950 m²/g. With such a high specific surface area, high adsorption performance and high water retention can be achieved.

A pore size of the porous silica-clay composite material according to the present embodiment is 2 to 30 nm. A lower limit of the pore size is preferably 2.5 nm, more preferably, 3 nm, further preferably, 3.5 nm. An upper limit of the pore size is preferably 20 nm, more preferably, 15 nm. When the pore size falls within such a range, various molecules can be adsorbed into the pores, and liquid can be absorbed through capillary condensation.

A cation exchange capacity (CEC) of the porous silica-clay composite material according to the present embodiment is 10 meq/100 g or more. A lower limit of the CEC is preferably 15 meq/100 g, more preferably, 16 meq/100 g, further preferably, 17 meq/100 g. For example, an upper limit of the CEC is 120 meq/100 g, preferably, 110 meq/100 g. With such a high CEC, adsorption and sustained release performance of a cationic substance can be improved.

A water absorption rate of the porous silica-clay composite material according to the present embodiment is 50% or more. A lower limit of the water absorption rate is preferably 55%, more preferably, 60%, further preferably, 65%. For example, an upper limit of the water absorption rate may be 410%, or may be 400%. With such a high water absorption rate, high water retention can be achieved.

A methylene blue adsorption rate of the porous silica-clay composite material according to the present embodiment is 60% or more. A lower limit of the methylene blue adsorption rate is preferably 70%, more preferably, 80%, further preferably, 85%. For example, an upper limit of the methylene blue adsorption rate may be 99.6%, or may be 99%. With such a high methylene blue adsorption rate, high adsorption performance can be achieved.

A total pore volume of the porous silica-clay composite material according to the present embodiment is 0.7 cm³/g or more. A lower limit of the total pore volume is preferably 0.8 cm³/g, more preferably, 1 cm³/g, further preferably, 1.5 cm³/g. For example, an upper limit of the total pore volume may be 4.1 cm³/g, or may be 3 cm³/g. With such a high total pore volume, high water retention and high adsorption performance can be achieved.

### <Applications of Porous Silica-Clay Composite Material>

### Water Purifying Agent

A water purifying agent according to the present embodiment contains the above-mentioned porous silica-clay composite material. Such a water purifying agent has high adsorption performance. Thus, when the water purifying agent is mixed with untreated water such as muddy water, impurities can be adsorbed and removed.

### Soil Treatment Powder

Soil treatment powder according to the present embodiment contains the above-mentioned porous silica-clay composite material. Such soil treatment powder has high water retention. Thus, even a small amount of rainwater can be retained, and plants can grow in a dry region with little rain, on a rooftop of a building, or the like. Further, when a fertilizer component such as phosphoric acid is adopted as a raw material, the soil treatment powder may also serve as nutrients for the soil.

In addition to the above-mentioned applications, the porous silica-clay composite material is also applicable to a deodorant, a desiccant, a horticultural sponge, pet litter sand, a wall material, a water-retentive pavement for a road, a water purifying agent, a soil purification agent, an exhaust gas treatment material, an oil absorbent, a recovery agent for rare earth elements and radioactive substances, a food additive, a thermal insulation material, a soundproofing material, a heat-resistant material, a humidity control agent, a drug delivery carrier, and the like.

### <Method of Producing Porous Silica-Clay Composite Material>

As illustrated in FIG. 1, a method of producing a porous silica-clay composite material according to the present embodiment includes:
i) a mixing step for mixing a first solution and a second solution, the first solution containing a clay material, a base, and water, the second solution containing a silica source, an acid, water, and optionally the clay material; and
ii) a drying step for heating and drying a mixed solution obtained through mixing in the mixing step.

### i) Mixing Step

In the mixing step, first, the first solution containing the clay material, the base, and the water and the second solution containing the silica source, the acid, the water, and optionally the clay material are prepared. Then, the basic first solution and the acidic second solution are mixed. The base contained in the first solution is preferably added to the first solution immediately before the first solution and the second solution are mixed.

The clay material is a natural or artificial swelling clay mineral, and bentonite, saponite, stevensite, hectorite, or the like may be used. Those clay materials may be contained individually, or may be contained in combination. As the clay material, a clay material in a dry state that does not contain moisture is preferably used.

The clay material is introduced into the mixed solution at a content rate of 0.1 to 10% by wt%. A lower limit of the content rate of the clay material with respect to the mixed solution is preferably 0.11%, more preferably, 0.12%, further preferably, 0.13%. An upper limit of the content rate of the clay material with respect to the mixed solution is preferably 9%, more preferably, 8%, further preferably, 7%. Note that the entire amount of the clay material may be introduced only into the first solution, or a divided amount thereof may be introduced into each of the first solution and the second solution.

The water is introduced into the mixed solution at a content rate of 20 to 95% by wt%, and is appropriately divided and introduced into each of the first solution and the second solution. A lower limit of the content rate of the water with respect to the mixed solution is preferably 30%, more preferably, 40%, further preferably, 50%. An upper limit of the content rate of the water with respect to the mixed solution is preferably 90%, more preferably, 85%, further preferably, 80%.

The base is introduced into the first solution in order to improve porosity of the silica, and is preferably introduced in a form of an aqueous solution.

The base is alkylamines such as methylamine, ethylamine, dimethylamine, diethylamine, trimethylamine, and triethylamine, ammonia, sodium hydroxide, potassium hydroxide, or the like, and is preferably ammonia. The base is introduced into the first solution at a content rate of 0.05 to 0.3% by wt%. A lower limit of the content rate of the base with respect to the first solution is preferably 0.06%, more preferably, 0.07%, further preferably, 0.08%. An upper limit of the content rate of the base with respect to the first solution is preferably 0.2%, more preferably, 0.15%, further preferably, 0.1%.

The base is added preferably after the clay material is added to the water. Further, a stirring step is preferably performed before the base is added, in other words, in a state in which the clay material is added to the water.

Stirring in the stirring step is performed for 1 to 72 hours. A lower limit of a stirring time is preferably two hours, more preferably, three hours, further preferably, four hours. An upper limit of a stirring time is preferably 70 hours, more preferably, 50 hours, further preferably, 30 hours. Stirring may be performed at a room temperature.

The silica source is introduced into the second solution at a content rate of 30 to 90% by wt%. A lower limit of the content rate of the silica source with respect to the second solution is preferably 40%, more preferably, 45%, further preferably, 50%. An upper limit of the content rate of the silica source with respect to the second solution is preferably 85%, more preferably, 80%, further preferably, 78%.

The silica source is alkoxysilane or the like. Examples thereof include tetramethoxysilane, tetraethoxysilane, trimethylmethoxysilane, dimethyldimethoxysilane, diethylethoxysilane, hydroxyethyltrimethoxysilane, hydroxyethyl dimethylmethoxysilane, 3-aminopropyldimethylmethoxysilane, 3-aminopropyltriethoxysilane, 3-mercaptopropyltrimethoxysilane, 2-methoxyethyltriethoxysilane, phenyltriethoxysilane, p-hydroxyphenyltrimethoxysilane, p-hydroxybenzyltriethoxysilane, and p-mercaptobenzyltripropoxysilane, and tetramethoxysilane and tetraethoxysilane are preferred. Those silica sources may be contained individually, or may be contained in combination.

The acid is introduced into the second solution as a catalyst for hydrolyzing the silica source, and is preferably introduced in a form of an aqueous solution.

The acid is hydrochloric acid, nitric acid, sulfuric acid, phosphoric acid, formic acid, acetic acid, oxalic acid, carbonic acid, or the like, and is preferably phosphoric acid. The acid is introduced into the second solution at a content rate of 0.03 to 0.2% by wt%. A lower limit of the content rate of the acid with respect to the second solution is preferably 0.04%, more preferably, 0.05%, further preferably, 0.06%. An upper limit of the content rate of the acid with respect to the second solution is preferably 0.19%, more preferably, 0.18%, further preferably, 0.17%.

A sum of a weight of the silica source and a weight of the acid with respect to a sum of a weight of the clay material and a weight of the base in the mixed solution [(weight of silica source + weight of acid)/(weight of clay material + weight of base)] is 52 to 300. A lower limit of the value is preferably 53, more preferably, 54, further preferably, 55. An upper limit of the value is preferably 290, more preferably, 280, further preferably, 270. Within such a numerical value range, a high specific surface area can be achieved.

After mixing, the mixture may be left, and may be subjected to aging. An aging temperature is 20 to 100 degrees Celsius. A lower limit of the aging temperature is preferably 21 degrees Celsius, more preferably, 22 degrees Celsius, further preferably, 23 degrees Celsius. An upper limit of the aging temperature is preferably 90 degrees Celsius, more preferably, 80 degrees Celsius, further preferably, 70 degrees Celsius. An aging time is 1 to 72 hours. A lower limit of the aging time is preferably 2 hours, more preferably, 3 hours, further preferably, 4 hours. An upper limit of the aging time is preferably 70 hours, more preferably, 50 hours, further preferably, 30 hours.

### ii) Drying Step

A drying temperature in the drying step is 20 to 100 degrees Celsius. A lower limit of the drying temperature is preferably 23 degrees Celsius, more preferably, 30 degrees Celsius, further preferably, 40 degrees Celsius. An upper limit of the drying temperature is preferably 100 degrees Celsius, more preferably, 90 degrees Celsius, further preferably, 80 degrees Celsius.

A drying time in the drying step is 5 to 168 hours. A lower limit of the drying time is preferably 6 hours, more preferably, 7 hours, further preferably, 8 hours. An upper limit of the drying time is preferably 160 hours, more preferably, 150 hours, further preferably, 140 hours.

After drying, the dried matter thus obtained is ground. With this, the porous silica-clay composite material in a powder form can be obtained.

### Examples

Next, description is made on Examples in the present invention and Comparative Examples. Note that, the present invention is not limited thereto.

### <Producing Porous Silica-Clay Composite Material>

A basic first solution containing components shown in Table 1 and an acidic second solution containing components shown in Table 2, which are described later, were prepared. Then, the first solution and the second solution were mixed to be uniform, at a room temperature for 1 minute. Then, the resultant was subjected to aging at a temperature of 70 degrees Celsius for 1 day. Subsequently, the resultant was dried at a temperature of 70 degrees Celsius for 1 day. After drying, the dried matter was ground to obtain powder of a porous silica-clay composite material. Note that tetraethoxysilane, which was manufactured from Tokyo Chemical Industry Co., Ltd., bentonite, saponite, hectorite, and stevensite, which were manufactured from KUNIMINE INDUSTRIES CO., LTD., were used.

### <Physical Property Evaluation>

### Measurement of Content Rate of Clay Material (Clay in Product: wt%)

Calculation was performed based on (total weight of clay material)/(total weight of clay material + weight of SiO₂ obtained from added TEOS) × 100.

### Measurement of Specific Surface Area, Pore Size, and Total Pore Volume

An N₂ gas adsorption test was conducted, and a specific surface area, a pore size, and a total pore volume were calculated by the BET method.

### Measurement of Cation Exchange Capacity (CEC)

Cation exchange was performed three times using ammonium acetate, followed by three washes with alcohol. Ammonium ions were then extracted three times using KCl, and the resulting extract was filtered through filter paper. Ammonium ions in the extract were quantified by the Formol method, and the cation exchange capacity per 100 g of the sample was calculated.

### Measurement of Water Absorption Rate

Seven holes each having a size of approximately 2 mm were formed in a bottom of a metal container, and a glass fiber filter was placed. The container was placed in a metal tray filled with water, and was left to stand for 60 minutes to measure the weight after water absorption. 3 g of the sample was placed and left to stand for 60 minutes, and the weight after water absorption was measured. A water absorption rate was calculated based on (weight of sample after water absorption with sample - weight after water absorption without sample - sample weight)/sample weight × 100.

### Measurement of Methylene Blue Adsorption

0.1 g of the sample was added to 100 mL of a 0.05 mM aqueous methylene blue solution, and the resultant was stirred for 1 day. The mixture was then filtered using a PTFE syringe filter, and the absorbance was measured. A methylene blue adsorption amount was calculated based on a reduction rate of absorbance of the blank.

Table 1 shows compositions of the basic solution (the first solution) in the respective examples and comparative examples. Table 2 shows compositions of the acid solution (the second solution) in the respective examples and comparative examples. Table 3 shows compositions of the mixed solution of the first solution and the second solution in the respective examples and comparative examples. Table 4 shows physical property values of a product in each of the examples and comparative examples. Note that, as alkoxysilane, tetraethoxysilane (TEOS) was used in all the examples and comparative examples.

**[Table 1]**

| EXAMPLE COMPARATIVE EXAMPLE | BASIC SOLUTION (FIRST SOLUTION) | | | | | |
|---|---|---|---|---|---|---|
| | clay | H₂O(mL) | clay(g) | NH₃aq(uL) | clay( wt%) | NH₃ (wt%) |
| EXAMPLE 1 | BENTONITE | 25 | 0.3 | 95.57 | 1.18 | 0.0949 |
| EXAMPLE 2 | SAPONITE | 25 | 0.1 | 95.57 | 0.40 | 0.0956 |
| EXAMPLE 3 | STEVENSITE | 25 | 0.1 | 95.57 | 0.40 | 0.0956 |
| EXAMPLE 4 | HECTORITE | 25 | 0.1 | 95.57 | 0.40 | 0.0956 |
| EXAMPLE 5 | BENTONITE | 12.5 | 0.5 | 47.785 | 3.83 | 0.0923 |
| EXAMPLE 6 | BENTONITE | 8.3 | 0.333 | 31.857 | 3.84 | 0.0927 |
| EXAMPLE 7 | BENTONITE | 8.3 | 0.5 | 31.857 | 5.66 | 0.0909 |
| EXAMPLE 8 | BENTONITE | 12.5 | 0.3 | 47.785 | 2.34 | 0.0938 |
| EXAMPLE 9 | BENTONITE | 12.5 | 0.1 | 47.785 | 0.79 | 0.0952 |
| COMPARATIVE EXAMPLE 1 | BENTONITE | 25 | 0 | 95.57 | 0.00 | 0.0960 |
| COMPARATIVE EXAMPLE 2 | BENTONITE | 25 | 0.5 | 95.57 | 1.95 | 0.0941 |
| COMPARATIVE EXAMPLE 3 | BENTONITE | 25 | 0.5 | 95.57 | 1.95 | 0.0941 |
| COMPARATIVE EXAMPLE 4 | BENTONITE | 25 | 0.5 | 95.57 | 1.95 | 0.0941 |
| COMPARATIVE EXAMPLE 5 | BENTONITE | 25 | 0.5 | 95.57 | 1.95 | 0.0941 |
| COMPARATIVE EXAMPLE 6 | SAPONITE | 25 | 0.5 | 95.57 | 1.95 | 0.0941 |
| COMPARATIVE EXAMPLE 7 | STEVENSITE | 25 | 0.5 | 95.57 | 1.95 | 0.0941 |
| COMPARATIVE EXAMPLE 8 | HECTORITE | 25 | 0.5 | 95.57 | 1.95 | 0.0941 |
| COMPARATIVE EXAMPLE 9 | SAPONITE | 25 | 0.5 | 95.57 | 1.95 | 0.0941 |
| COMPARATIVE EXAMPLE 10 | SAPONITE | 25 | 0.5 | 95.57 | 1.95 | 0.0941 |
| COMPARATIVE EXAMPLE 11 | STEVENSITE | 25 | 0.5 | 95.57 | 1.95 | 0.0941 |
| COMPARATIVE EXAMPLE 12 | STEVENSITE | 25 | 0.5 | 95.57 | 1.95 | 0.0941 |
| COMPARATIVE EXAMPLE 13 | HECTORITE | 25 | 0.5 | 95.57 | 1.95 | 0.0941 |
| COMPARATIVE EXAMPLE 14 | HECTORITE | 25 | 0.5 | 95.57 | 1.95 | 0.0941 |
| COMPARATIVE EXAMPLE 15 | BENTONITE | 25 | 1 | 95.57 | 3.83 | 0.0923 |
| COMPARATIVE EXAMPLE 16 | BENTONITE | 25 | 0.75 | 95.57 | 2.90 | 0.0932 |
| COMPARATIVE EXAMPLE 17 | BENTONITE | 25 | 0.05 | 95.57 | 0.20 | 0.0958 |
| COMPARATIVE EXAMPLE 18 | BENTONITE | 25 | 0.01 | 95.57 | 0.04 | 0.0960 |

**[Table 2]**

| EXAMPLE COMPARATIVE EXAMPLE | ACIDIC SOLUTION (SECOND SOLUTION) | | | | | | | |
|---|---|---|---|---|---|---|---|---|
| | clay | H₂O (mL) | alkoxysilane (mL) | clay (g) | PO₄H₃aq (uL) | alkoxysilane (wt%) | clay (wt%) | PO₄H₃ (wt%) |
| EXAMPLE 1 | - | 25 | 28.35 | 0 | 41.43 | 51.5 | 0.0 | 0.123 |
| EXAMPLE 2 | - | 25 | 28.35 | 0 | 41.43 | 51.5 | 0.0 | 0.123 |
| EXAMPLE 3 | - | 25 | 28.35 | 0 | 41.43 | 51.5 | 0.0 | 0.123 |
| EXAMPLE 4 | - | 25 | 28.35 | 0 | 41.43 | 51.5 | 0.0 | 0.123 |
| EXAMPLE 5 | - | 12.5 | 28.35 | 0 | 20.715 | 68.0 | 0.0 | 0.081 |
| EXAMPLE 6 | - | 8.3 | 28.35 | 0 | 13.81 | 76.2 | 0.0 | 0.061 |
| EXAMPLE 7 | - | 8.3 | 28.35 | 0 | 13.81 | 76.2 | 0.0 | 0.061 |
| EXAMPLE 8 | - | 12.5 | 28.35 | 0 | 20.715 | 68.0 | 0.0 | 0.081 |
| EXAMPLE 9 | - | 12.5 | 28.35 | 0 | 20.715 | 68.0 | 0.0 | 0.081 |
| COMPARATIVE EXAMPLE 1 | BENTONITE | 25 | 28.35 | 0.5 | 41.43 | 51.0 | 0.957 | 0.122 |
| COMPARATIVE EXAMPLE 2 | - | 25 | 28.35 | 0 | 41.43 | 51.5 | 0.0 | 0.123 |
| COMPARATIVE EXAMPLE 3 | - | 25 | 28.35 | 0 | 41.43 | 51.5 | 0.0 | 0.123 |
| COMPARATIVE EXAMPLE 4 | - | 25 | 28.35 | 0 | 41.43 | 51.5 | 0.0 | 0.123 |
| COMPARATIVE EXAMPLE 5 | - | 25 | 28.35 | 0 | 41.43 | 51.5 | 0.0 | 0.123 |
| COMPARATIVE EXAMPLE 6 | - | 25 | 28.35 | 0 | 41.43 | 51.5 | 0.0 | 0.123 |
| COMPARATIVE EXAMPLE 7 | - | 25 | 28.35 | 0 | 41.43 | 51.5 | 0.0 | 0.123 |
| COMPARATIVE EXAMPLE 8 | - | 25 | 28.35 | 0 | 41.43 | 51.5 | 0.0 | 0.123 |
| COMPARATIVE EXAMPLE 9 | - | 25 | 28.35 | 0 | 41.43 | 51.5 | 0.0 | 0.123 |
| COMPARATIVE EXAMPLE 10 | - | 25 | 28.35 | 0 | 41.43 | 51.5 | 0.0 | 0.123 |
| COMPARATIVE EXAMPLE 11 | - | 25 | 28.35 | 0 | 41.43 | 51.5 | 0.0 | 0.123 |
| COMPARATIVE EXAMPLE 12 | - | 25 | 28.35 | 0 | 41.43 | 51.5 | 0.0 | 0.123 |
| COMPARATIVE EXAMPLE 13 | - | 25 | 28.35 | 0 | 41.43 | 51.5 | 0.0 | 0.123 |
| COMPARATIVE EXAMPLE 14 | - | 25 | 28.35 | 0 | 41.43 | 51.5 | 0.0 | 0.123 |
| COMPARATIVE EXAMPLE 15 | - | 25 | 28.35 | 0 | 41.43 | 51.5 | 0.0 | 0.123 |
| COMPARATIVE EXAMPLE 16 | - | 25 | 28.35 | 0 | 41.43 | 51.5 | 0.0 | 0.123 |
| COMPARATIVE EXAMPLE 17 | - | 25 | 28.35 | 0 | 41.43 | 51.5 | 0.0 | 0.123 |
| COMPARATIVE EXAMPLE 18 | - | 25 | 28.35 | 0 | 41.43 | 51.5 | 0.0 | 0.123 |

**[Table 3]**

| EXAMPLE COMPARATIVE EXAMPLE | MIXED SOLUTION | | | | | |
|---|---|---|---|---|---|---|
| | clay | PO₄H₃ (wt%) | NH₃ (wt%) | alkoxysilane (wt%) | clay (wt%) | WEIGHT RATIO (PO₄H₃+alkoxysilane) / (NH₃+clay) |
| EXAMPLE 1 | BENTONITE | 0.0827 | 0.0312 | 34.5612 | 0.3891 | 82.4256 |
| EXAMPLE 2 | SAPONITE | 0.0829 | 0.0313 | 34.6511 | 0.1300 | 215.2805 |
| EXAMPLE 3 | STEVENSITE | 0.0829 | 0.0313 | 34.6511 | 0.1300 | 215.2805 |
| EXAMPLE 4 | HECTORITE | 0.0829 | 0.0313 | 34.6511 | 0.1300 | 215.2805 |
| EXAMPLE 5 | BENTONITE | 0.0611 | 0.0231 | 51.0245 | 0.9573 | 52.1069 |
| EXAMPLE 6 | BENTONITE | 0.0487 | 0.0184 | 61.0731 | 0.7632 | 78.2055 |
| EXAMPLE 7 | BENTONITE | 0.0485 | 0.0183 | 60.8403 | 1.1415 | 52.4976 |
| EXAMPLE 8 | BENTONITE | 0.0613 | 0.0231 | 51.2207 | 0.5766 | 85.5042 |
| EXAMPLE 9 | BENTONITE | 0.0615 | 0.0232 | 51.4183 | 0.1929 | 238.1334 |
| COMPARATIVE EXAMPLE 1 | BENTONITE | 0.0825 | 0.0312 | 34.4718 | 0.6468 | 50.9705 |
| COMPARATIVE EXAMPLE 2 | BENTONITE | 0.0825 | 0.0312 | 34.4718 | 0.6468 | 50.9705 |
| COMPARATIVE EXAMPLE 3 | BENTONITE | 0.0825 | 0.0312 | 34.4718 | 0.6468 | 50.9705 |
| COMPARATIVE EXAMPLE 4 | BENTONITE | 0.0825 | 0.0312 | 34.4718 | 0.6468 | 50.9705 |
| COMPARATIVE EXAMPLE 5 | BENTONITE | 0.0825 | 0.0312 | 34.4718 | 0.6468 | 50.9705 |
| COMPARATIVE EXAMPLE 6 | SAPONITE | 0.0825 | 0.0312 | 34.4718 | 0.6468 | 50.9705 |
| COMPARATIVE EXAMPLE 7 | STEVENSITE | 0.0825 | 0.0312 | 34.4718 | 0.6468 | 50.9705 |
| COMPARATIVE EXAMPLE 8 | HECTORITE | 0.0825 | 0.0312 | 34.4718 | 0.6468 | 50.9705 |
| COMPARATIVE EXAMPLE 9 | SAPONITE | 0.0825 | 0.0312 | 34.4718 | 0.6468 | 50.9705 |
| COMPARATIVE EXAMPLE 10 | SAPONITE | 0.0825 | 0.0312 | 34.4718 | 0.6468 | 50.9705 |
| COMPARATIVE EXAMPLE 11 | STEVENSITE | 0.0825 | 0.0312 | 34.4718 | 0.6468 | 50.9705 |
| COMPARATIVE EXAMPLE 12 | STEVENSITE | 0.0825 | 0.0312 | 34.4718 | 0.6468 | 50.9705 |
| COMPARATIVE EXAMPLE 13 | HECTORITE | 0.0825 | 0.0312 | 34.4718 | 0.6468 | 50.9705 |
| COMPARATIVE EXAMPLE 14 | HECTORITE | 0.0825 | 0.0312 | 34.4718 | 0.6468 | 50.9705 |
| COMPARATIVE EXAMPLE 15 | BENTONITE | 0.0820 | 0.0310 | 34.2503 | 1.2852 | 26.0846 |
| COMPARATIVE EXAMPLE 16 | BENTONITE | 0.0822 | 0.0311 | 34.3607 | 0.9670 | 34.5089 |
| COMPARATIVE EXAMPLE 17 | BENTONITE | 0.0830 | 0.0313 | 34.6736 | 0.0651 | 360.5761 |
| COMPARATIVE EXAMPLE 18 | BENTONITE | 0.0830 | 0.0314 | 34.6917 | 0.0130 | 783.7423 |

**[Table 4]**

| EXAMPLE COMPARATIVE EXAMPLE | clay | CLAY IN PRODUCT (wt%) | stirring time(h) | surface area(m²/g) | pore size(nm) | CEC (meq/g) | **WATER** ABSORPTION RATE (%) | MB adsorption(%) | TOTAL PORE VOLUME (cm³/g) |
|---|---|---|---|---|---|---|---|---|---|
| EXAMPLE 1 | BENTONITE | 3.76 | 4 | 1388.4 | 4.5 | 43.7 | 124.1 | 84.9 | 1.6 |
| EXAMPLE 2 | SAPONITE | 1.28 | 4 | 1389.4 | 4.0 | 23.1 | 57.4 | 86.0 | 0.9 |
| EXAMPLE 3 | STEVENSITE | 1.28 | 4 | 1313.2 | 4.5 | 22.6 | 55.4 | 97.4 | 0.9 |
| EXAMPLE 4 | HECTORITE | 1.28 | 4 | 1262.3 | 3.9 | 18.0 | 76.9 | 88.0 | 0.7 |
| EXAMPLE 5 | BENTONITE | 6.11 | 4 | 1417.3 | 4.9 | 40.1 | 272.7 | 98.6 | 1.7 |
| EXAMPLE 6 | BENTONITE | 4.15 | 4 | 1590.3 | 10.4 | 94.5 | 405.6 | 98.7 | 4.1 |
| EXAMPLE 7 | BENTONITE | 6.11 | 4 | 1707.2 | 6.5 | 105.3 | 376.2 | 99.6 | 2.8 |
| EXAMPLE 8 | BENTONITE | 3.76 | 4 | 1926.3 | 3.8 | 21.0 | 175.8 | 98.4 | 1.8 |
| EXAMPLE 9 | BENTONITE | 1.28 | 4 | 1286.5 | 5.3 | 30.6 | 172.3 | 61.1 | 1.7 |
| COMPARATIVE EXAMPLE 1 | BENTONITE | 6.11 | 4 | 942.4 | 4.1 | 33.0 | 130.8 | 99.4 | 0.97 |
| COMPARATIVE EXAMPLE 2 | BENTONITE | 6.11 | 4 | 1010.8 | 3.2 | 51.4 | 111.2 | 99.6 | 0.81 |
| COMPARATIVE EXAMPLE 3 | BENTONITE | 6.11 | 1 | 520.73 | 2.2 | 35.9 | 96.3 | 99.4 | 0.3 |
| COMPARATIVE EXAMPLE 4 | BENTONITE | 6.11 | 4 | 893.41 | 4.9 | 40.3 | 130.9 | 99.6 | 1.1 |
| COMPARATIVE EXAMPLE 5 | BENTONITE | 6.11 | 24 | 950.75 | 3.6 | 35.4 | 122.1 | 99.1 | 0.8 |
| COMPARATIVE EXAMPLE 6 | SAPONITE | 6.11 | 1 | 780.2 | 3.0 | 30.8 | 107.4 | 98.7 | 0.3 |
| COMPARATIVE EXAMPLE 7 | STEVENSITE | 6.11 | 1 | 925.0 | 6.5 | 34.4 | 144.8 | 98.8 | 1.5 |
| COMPARATIVE EXAMPLE 8 | HECTORITE | 6.11 | 1 | 984.0 | 4.0 | 33.8 | 130.2 | 99.6 | 1.0 |
| COMPARATIVE EXAMPLE 9 | SAPONITE | 6.11 | 4 | 658.2 | 4.2 | 31.9 | 121.2 | 99.6 | 0.7 |
| COMPARATIVE EXAMPLE 10 | SAPONITE | 6.11 | 24 | 757.4 | 3.6 | 36.2 | 117.1 | 99.3 | 0.7 |
| COMPARATIVE EXAMPLE 11 | STEVENSITE | 6.11 | 4 | 656.2 | 4.6 | 41.9 | 138.2 | 99.5 | 0.8 |
| COMPARATIVE EXAMPLE 12 | STEVENSITE | 6.11 | 24 | 740.6 | 4.1 | 33.0 | 134.0 | 98.5 | 0.8 |
| COMPARATIVE EXAMPLE 13 | HECTORITE | 6.11 | 4 | 721.1 | 4.4 | 32.5 | 132.0 | 99.4 | 0.8 |
| COMPARATIVE EXAMPLE 14 | HECTORITE | 6.11 | 24 | 939.1 | 3.8 | 35.5 | 122.9 | 99.4 | 0.9 |
| COMPARATIVE EXAMPLE 15 | BENTONITE | 11.51 | 4 | 841 | 3.5 | 42.7 | 144.4 | 98.5 | 0.7 |
| COMPARATIVE EXAMPLE 16 | BENTONITE | 8.89 | 4 | 628.32 | 3.3 | 40.1 | 126.2 | 99.5 | 0.5 |
| COMPARATIVE EXAMPLE 17 | BENTONITE | 0.65 | 4 | 859.47 | 3.2 | 32.6 | 126.2 | 56.8 | 0.7 |
| COMPARATIVE EXAMPLE 18 | BENTONITE | 0.13 | 4 | 924.12 | 3.3 | 39.2 | 133.5 | 52.0 | 0.8 |

Based on the above, it was confirmed that the porous silica-clay composite material in each of the examples had a high specific surface area, a high CEC, a high water absorption rate, a high methylene blue adsorption rate, and a high total pore volume.

## Claims

1. A porous silica-clay composite material, wherein,
by wt%,
a content rate of a clay material with respect to a sum of the clay material and silica [[clay material/(clay material + silica)] × 100] is 1 to 10%, and
a specific surface area is 1,080 m²/g or greater.

2. A water purifying agent containing the porous silica-clay composite material according to claim 1.

3. Soil treatment powder containing the porous silica-clay composite material according to claim 1.

4. A method of producing a porous silica-clay composite material, the method comprising:
i) a mixing step for mixing a first solution and a second solution, the first solution containing a clay material, a base, and water, the second solution containing a silica source, an acid, water, and optionally the clay material; and
ii) a drying step for heating and drying a mixed solution obtained through mixing in the mixing step, wherein
a sum of a weight of the silica source and a weight of the acid with respect to a sum of a weight of the clay material and a weight of the base in the mixed solution [(weight of silica source + weight of acid)/(weight of clay material + weight of base)] is 52 to 300.

5. The method of producing a porous silica-clay composite material according to claim 4, wherein
the clay material is a swelling clay mineral.

6. The method of producing a porous silica-clay composite material according to claim 5, wherein
the swelling clay mineral is one or more selected from bentonite, saponite, stevensite, and hectorite.

7. The method of producing a porous silica-clay composite material according to any one of claims 4 to 6, wherein,
by wt%, a content rate of the clay material with respect to the mixed solution is 0.1 to 10%.

8. The method of producing a porous silica-clay composite material according to any one of claims 4 to 7, wherein
the base is ammonia.

9. The method of producing a porous silica-clay composite material according to any one of claims 4 to 8, wherein,
by wt%, a content rate of the base with respect to the first solution is 0.05 to 0.3%.

10. The method of producing a porous silica-clay composite material according to any one of claims 4 to 9, wherein
the silica source is alkoxysilane.

11. The method of producing a porous silica-clay composite material according to any one of claims 4 to 10, wherein,
by wt%, a content rate of the silica source with respect to the second solution is 30 to 90%.

12. The method of producing a porous silica-clay composite material according to any one of claims 4 to 11, wherein
the acid is phosphoric acid.

13. The method of producing a porous silica-clay composite material according to any one of claims 4 to 12, wherein,
by wt%, a content rate of the acid with respect to the second solution is 0.03 to 0.2%.

14. The method of producing a porous silica-clay composite material according to any one of claims 4 to 13, wherein
in the mixing step, the first solution is prepared by adding the base after the clay material and the water are mixed, and
a stirring step for stirring the clay material and the water is performed before the base is added.

15. The method of producing a porous silica-clay composite material according to claim 14, wherein
a stirring time in the stirring step is 1 to 72 hours.

16. The method of producing a porous silica-clay composite material according to any one of claims 4 to 15, wherein
a heating temperature in the drying step is 20 to 100 degrees Celsius.

17. The method of producing a porous silica-clay composite material according to any one of claims 4 to 16, wherein
a drying time in the drying step is 5 to 168 hours.
